Europäisches Patentamt

European Patent Office

Office européen des brevets

(19)

(11) Veröffentlichungsnummer: 0 118 017

A2

## (12) EUROPÄISCHE PATENTANMELDUNG

(21) Anmeldenummer: 84100938.4

(22) Anmeldetag: 31.01.84

(51) Int. Cl.³: B 01 D 47/06
B 01 D 53/34, F 23 J 15/00

(30) Priorität: 05.02.83 DE 3303874
05.07.83 DE 3324124
05.07.83 DE 3324123

(43) Veröffentlichungstag der Anmeldung:
12.09.84 Patentblatt 84/37

(84) Benannte Vertragsstaaten:
AT BE CH DE FR GB IT LI NL SE

(71) Anmelder: Kroll, Walter,
Wilhelm-Busch-Strasse 13
D-7510 Backnang(DE)

(72) Erfinder: Kroll, Walter
Wilhelm-Busch-Strasse 13
D-7510 Backnang(DE)

(72) Erfinder: Christian, Paul
Akazienstrasse 5
D-7107 Bad Friedrichshall-Untergriesheim(DE)

(74) Vertreter: Dipl.-Phys.Dr. Manitz Dipl.-Ing. Finsterwald
Dipl.-Ing. Grämkow Dipl.-Chem.Dr. Heyn Dipl.-Phys.
Rotermund Morgan, B.Sc.(Phys)
Seelbergstrasse 23/25
D-7000 Stuttgart 50(DE)

(54) Gasreiniger.

(57) Die zu reinigenden Gase, insbesondere Rauchgase, gelangen über eine Zuführleitung (14) in einen Behandlungsraum (9), wo die Gase der Einwirkung einer in einem Bad (4) enthaltenen Reinigungsflüssigkeit ausgesetzt werden. Dazu wird die Flüssigkeit mittels einer rotierenden Scheibenanordnung (17) versprüht, deren Scheiben - vorzugsweise über eine hohle Welle (18) - ständig mit der Reinigungsflüssigkeit beaufschlagt werden, die dann aufgrund zentrifugaler Kräfte von der rotierenden Scheiben unter Bildung ringförmiger Sprühzonen abreißt. Der Gasreiniger ist in der Lage, in Rauchgasen enthaltenes Schwefeldioxid abzufangen. Dazu wird als Reinigungsflüssigkeit Wasser verwendet und mit Natriumcarbonat (Soda) versetzt. Das Natriumcarbonat setzt sich mit dem Wasser sowie dem in den Rauchgasen enthaltenen Kohlendioxid zu Natriumhydrogencarbonat um, welches mit dem im Rauchgas mitgeführten Schwefeldioxid bei Einleitung von Sauerstoff bzw. Zusatzluft durch eine Öffnung (26) in den Behandlungsraum (9) Natriumsulfat bildet, das sich am Boden des Bades (4) als Niederschlag sammelt.

./...

EP 0 118 017 A2

FIG.1

## Gasreiniger

Die Erfindung betrifft einen Gasreiniger, insbesondere für Rauchgase von Feuerungsanlagen, mit einem vom Gas durchsetzten Behandlungsraum und einer darin als Sprühvorrichtung untergebrachten, um eine etwa vertikale Mittelachse rotierenden Scheibenanordnung, die - vorzugsweise über eine die Scheiben tragenden hohle Welle - mit einer zu versprühenden Reinigungsflüssigkeit unter Bildung eines an der Scheibenanordnung anhaftenden und von der Scheibenanordnung unter Einwirkung zentrifugaler Kräfte nach außen in Form einer ringförmigen Sprühzone abreißenden Flüssigkeitsbelages beaufschlagbar ist.

Eine derartige Vorrichtung ist aus der DE-OS 31 22 026 bekannt. Der besondere Vorzug dieser Anordnung liegt darin, daß Sprühdüsen erübrigt werden, welche andernfalls immer der Gefahr einer Verstopfung ausgesetzt sind. Die zu versprühende Reinigungsflüssigkeit wird vielmehr von der vergleichsweise schnell umlaufenden Scheibenanordnung mit derartiger Geschwindigkeit abgeschleudert, daß sehr kleine Flüssigkeitströpfchen gebildet werden.

Jedoch ist der konstruktive Aufwand des aus der DE-OS 31 22 026 bekannten Gasreinigers noch relativ groß, da dort ein gesondertes Gebläse angeordnet werden muß, um die Strömung des zu reinigenden Gases durch den Behandlungsraum aufrechtzuerhalten und durch Wirbelbildung zusätzlich zur Verkleinerung der abgeschleuderten Flüssigkeitströpfchen beizutragen.

Deshalb ist es Aufgabe der Erfindung, einen Gasreiniger zu schaffen, welcher sich bei sehr geringem konstruktivem Aufwand durch eine gute Vernebelung der Reinigungsflüssigkeit und damit einen besonders hohen Wirkungsgrad bei der Reinigung auszeichnet.

Diese Aufgabe wird dadurch gelöst, daß die Scheibenanordnung eine oder mehrere, vorzugsweise perforierte Scheiben aufweist, an deren Umfang Ausnehmungen und/oder aerodynamisch wirksame Elemente angeordnet sind, vorzugsweise indem die Scheiben vom Umfangsrand her vielfach eingeschnitten sind und die durch die Einschnitte gebildeten Lappen nach Art von Propellerblättern gegenüber der Scheibenebene bzw. der Umlaufrichtung mit Anstellwinkel verwunden bzw. verschränkt sind, so daß das Gas beim Umlauf der Scheibenanordnung nach radial auswärts sowie in Achsrichtung der Scheibenanordnung - vorzugsweise nach abwärts gegen ein die Reinigungsflüssigkeit enthaltendes Bad - vom Gaszufuhrbereich des Behandlungsraumes weggedrängt wird.

Gemäß der Erfindung ist also vorgesehen, daß dieselben Elemente, welche zum Versprühen der Reinigungsflüssigkeit dienen, auch für den Durchsatz des Behandlungsraumes mit dem zu reinigenden Gas sorgen. Dabei wird gleichzeitig eine intensive Verwirbelung des zu reinigenden Gases sowie der versprühten Reinigungsflüssigkeit bewirkt. Im übrigen bilden die Perforationen bzw. die aerodynamischen Elemente sowie die Propellerblätter jeweils zusätzliche Abrißkanten, an denen der an den Scheiben anhaftende Flüssigkeitsfilm äußerst wirksam unter Versprühen abreißt.

Die bevorzugt vorgesehenen, propellerartig verwundenen Lappen lassen sich ebenso wie die Perforationen mit einfachsten Werkzeugen herstellen.

In zweckmäßiger Weiterbildung der Erfindung kann vorgesehen sein, daß die Scheibenanordnung innerhalb eines ringförmigen, vorzugsweise stationären Mantels angeordnet ist, der die Scheibenanordnung mit radialem Abstand in Umlaufrichtung umgibt, und daß bei einer Scheibenanordnung mit mehreren von der Reinigungsflüssigkeit beaufschlagbaren Scheiben der radiale Abstand zwischen Mantel und Scheibenrand bei der jeweils vom Gaszufuhrbereich des Behandlungsraumes weiter entfernten Scheibe größer ist als bei der jeweils vorangehend angeordneten Scheibe. Der Mantel bildet eine von der versprühten Reinigungsflüssigkeit ständig benetzte Prallfläche, auf der auch vom zu reinigenden Gas mitgeführte Feststoffe auftreffen, die dabei zwangsläufig von der versprühten Reinigungsflüssigkeit benetzt und fortgetragen werden. Der in Strömungsrichtung des zu reinigenden Gases zunehmende Abstand zwischen Mantel und Scheiben trägt zu einem hohen Durchsatz des Behandlungsraumes bei, indem einer "Verstopfung" des Behandlungsraumes mit versprühter bzw. vernebelter Reinigungsflüssigkeit entgegengewirkt wird. Den in Strömungsrichtung des zu reinigenden Gases von Scheibe zu Scheibe zunehmenden Mengen der versprühten Reinigungsflüssigkeit steht nämlich bei dieser Anordnung ein zunehmender Querschnitt zur Verfügung.

Weiterhin ist bevorzugt vorgesehen, daß die hohle Welle nur im Bereich ihres oberen Endes gelagert ist - vorzugsweise indem die hohle Welle ohne eigenes Lager direkt an der Welle eines Motors zum Antrieb der Scheibenanordnung angeordnet und ausschließlich mittels der Lager der Motorwelle radial und axial geführt ist - und mit ihrem unteren offenen Ende in das die Reinigungsflüssigkeit enthaltende Bad eintaucht sowie mittels propellerartiger Förderblätter, welche in dem offenen Ende angeordnet sind, beim Umlauf Flüssigkeit aus dem Bad in die Welle hinein zu Öffnungen treibt, welche in der Wandung der hohlen Welle jeweils nahe der Scheibenebenen bzw. an die Scheibenebenen anschließend angeordnet sind.

Um die Wärme des zu reinigenden Gases auszunutzen, kann dasselbe - vorzugsweise vor Einleitung in den Behandlungsraum - über einen Wärmetauscher strömen, welcher zweckmäßigerweise derart angeordnet ist, daß auf ihm gebildetes Kondensat in das Bad abtropfen kann, z.B. indem der Wärmetauscher innerhalb eines den Behandlungsraum umschließenden Ringraumes angeordnet ist, welcher nach unten durch die Oberfläche des Bades begrenzt ist. Diese Anordnung zeichnet sich einerseits dadurch aus, daß die vom Wärmetauscher abgeführte Wärme bei relativ hoher Temperatur anfällt und gleichzeitig die großen Wärmemengen ausgenutzt werden können, welche beim Kondensieren dampfförmiger Verunreinigungen des zu reinigenden Gases anfallen. Andererseits wirkt der Wärmetauscher als Vorreiniger, da dem zu reinigenden Gas beim Kondensieren der mitgeführten Dämpfe bereits ein Teil der Verunreinigungen vor Erreichen des Behandlungsraumes entzogen werden.

Bei Bedarf kann in das zu reinigende Gas ein Zusatzgas - bei Reinigung von Rauchgasen bevorzugt Zusatzluft - und in das Bad ein Neutralisationsmittel - bei Reinigung von Rauchgasen und Verwendung von Wasser als Reinigungsflüssigkeit bevorzugt Soda (Natriumcarbonat) - eingeleitet werden.

Im Falle von Rauchgasen kann auf diese Weise das im Gas enthaltene Schwefeldioxid unter Bildung von Natriumsulfat abgefangen werden. Das Natriumcarbonat (Soda) bildet nämlich zusammen mit Wasser und dem in den Rauchgasen enthaltenen Kohlenstoffdioxid Natriumhydrogencarbonat, welches sich mit dem Wasser, dem in der Zusatzluft enthaltenen Sauerstoff sowie dem im Rauchgas mitgeführten Schwefeldioxid zu Natriumsulfat umsetzt, wobei gleichzeitig Kohlensäure gebildet werden kann, die sich jedoch überwiegend in Wasser und Kohlendioxid aufspaltet.

Das Bad kann als Absetzbecken ausgebildet sein - wobei die gegebenenfalls mit ihrem unteren offenen Ende und den Förderblättern in das Bad eintauchende hohle Welle oberhalb einer im Bad angeordneten Abschirmwand angeordnet ist, um ein Verwirbeln der abgesetzten Feststoffe zu verhindern. Der am Grund des Absetzbeckens angesammelte Schlamm läßt sich in einen Trocknungsbehälter einführen, welcher bevorzugt innerhalb der zur Gasreinigungsvorrichtung führenden Gasleitung angeordnet ist, insbesondere wenn warme oder heiße Gase, wie Rauchgase, gereinigt werden sollen.

Um ohne aufwendige und störanfällige Schlammpumpen auskommen zu können, kann im geschlossenen Trockungsbehälter mittels einer Saugvorrichtung ein Unterdruck hergestellt werden, so daß sich der Schlamm über eine vom Grund des Absetzbeckens in den erhöht angeordneten Trocknungsbehälter führende Saugleitung in den Trocknungsbehälter einführen läßt. Die Saugvorrichtung mündet auslaßseitig bevorzugt in die Zuführleitung des Gasreinigers für das zu reinigende Gas oder in das Bad.

Nachfolgend wird die Erfindung anhand eines besonders bevorzugten Ausführungsbeispieles erläutert, welches in der Zeichnung dargestellt ist. Dabei zeigt

Fig. 1    ein schematisiertes Schnittbild des Gasreinigers,

Fig. 2    eine Scheibe der Scheibenanordnung in perspektivischer Darstellung und

Fig. 3    eine Ansicht der Förderblätter in der unteren Öffnung der hohlen Welle der Scheibenanordnung.

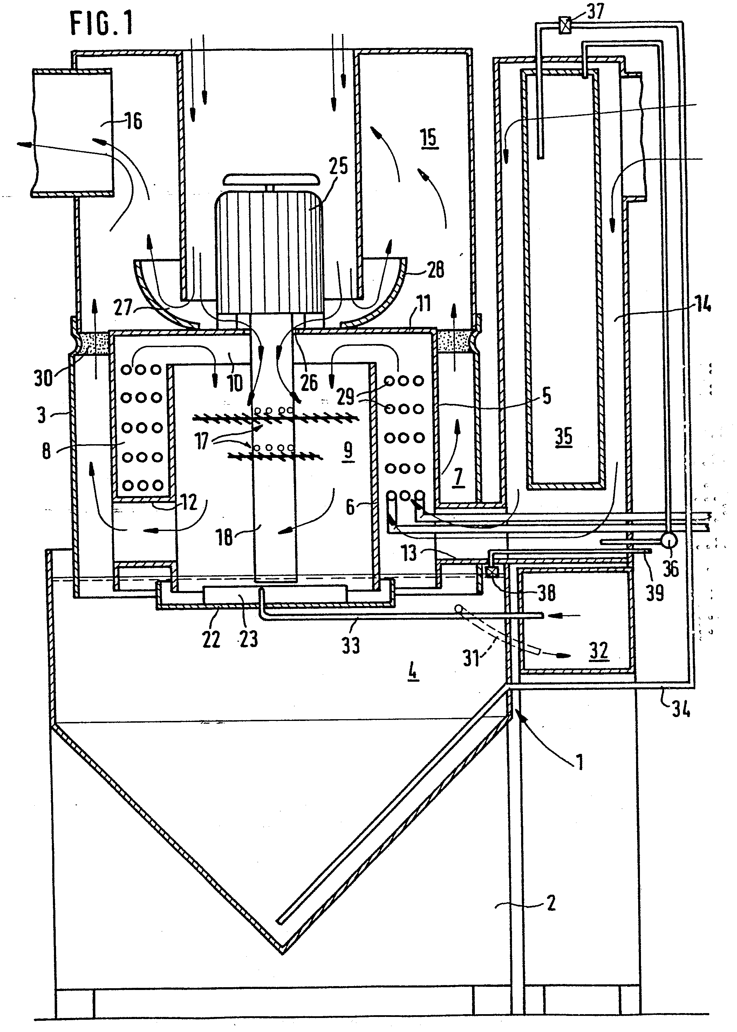

Nach Fig. 1 besitzt der erfindungsgemäße Gasreiniger ein im wesentlichen zylindrisches Gehäuse 1, dessen Unterteil 2 als Absetzbecken ausgebildet ist und dessen Oberteil 3 nach unten geöffnet ist und mit seinem unteren Rand in das vom Unterteil 2 aufgenommene Bad 4 einer Reinigungsflüssigkeit eintaucht. Im Oberteil 3 sind durch Zylinderwände 5 und 6 zwei konzentrische Ringräume 7 und 8 abgeteilt, welche nach unten durch die Oberfläche des Bades 4 begrenzt werden, in das die Zylinderwände 5 und 6 eintauchen.

Die Ringräume 7 und 8 umschließen einen Behandlungsraum 9, welcher mit dem Ringraum 8 über einen breiten ringförmigen Spalt 10 zwischen der Oberkante der Zylinderwand 6 und einem das Oberteil 3 unterteilenden Boden 11 angeordnet ist.

Darüber hinaus ist der Behandlungsraum 9 über eine oder mehrere die Zylinderwände 5 und 6 radial durchsetzende Leitungen 12 mit dem Ringraum 7 verbunden. Die Leitungen 12 sind bevorzugt als Tunnel mit im Querschnitt U-förmiger Wandung ausgebildet, deren U-Schenkel in das Bad 4 eintauchen, so daß dessen Oberfläche die die Leitungen 12 bildenden Tunnel nach unten abschließt.

Über eine Radialleitung 13, welche ebenfalls wie die Leitung 12 als nach unten durch die Oberfläche des Bades 3 abgeschlossener Tunnel ausgebildet sein kann, ist der Ringraum 8 mit einer Zufuhrleitung 14 für das zu reinigende Gas verbunden.

Der Ringraum 7 öffnet sich nach oben in eine oberhalb des Bodens 11 angeordnete Ringkammer 15, die sich ihrerseits über eine Ausblasleitung 16 zur Atmosphäre hin öffnet.

Der Behandlungsraum 9 nimmt eine Scheibenanordnung 17 auf, welche im wesentlichen aus zwei an einer hohlen Welle 18 übereinander angeordneten Scheiben 19 besteht, von denen die obere einen gegenüber der unteren Scheibe 19 vergrößerten Durchmesser besitzt. Von den Scheiben 19 ist zumindest die untere als Lochplatte ausgebildet. Alle Scheiben 19 sind von ihrem Außenrand her vielfach nach radial einwärts eingeschnitten, so daß radiale Lappen 20 gebildet werden, die nach Art von Propellerblättern gegenüber der Scheibenebene verwunden bzw. verschränkt sind.

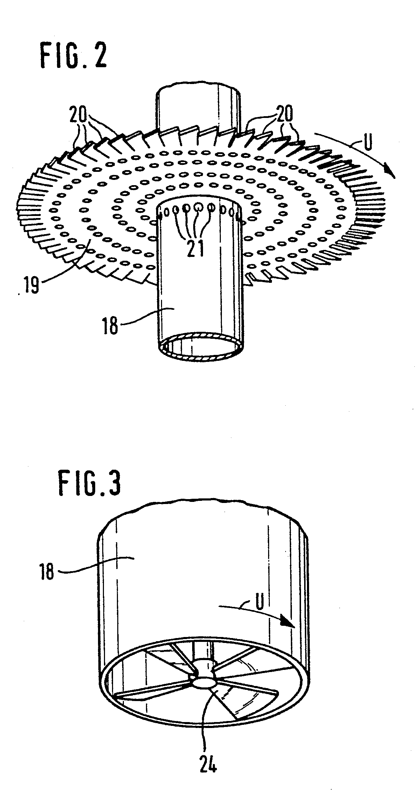

In der Umfangswandung der hohlen Welle 18 sind jeweils in unmittelbarer Nähe der Scheiben 19 Öffnungen 21 angeordnet, welche in Fig. 2 nur auf der Unterseite der Scheibe sichtbar sind, jedoch in gleicher Weise zusätzlich oder alternativ auch oberhalb der jeweiligen Scheibe 19 angeordnet sein können. Vorzugsweise sind die Löcher 21 so angeordnet, daß die Scheiben 19 bereichsweise den Rand der Löcher 21 bilden.

Durch diese Öffnungen 21 hindurch können die Scheiben 19 mit der im Bad 4 vorhandenen Reinigungsflüssigkeit beaufschlagt werden. Um die Reinigungsflüssigkeit zu den Öffnungen 21 und damit zu den Scheiben 19 fördern zu können, ist im unteren offenen Ende der hohlen Welle 18 ein Propellerteil 24 angeordnet, welches in das Bad 4 eintaucht und beim Umlaufen der hohlen Welle 18 in Umlaufrichtung U erfaßte Flüssigkeit nach oben drängt. Um eine unerwünschte Verwirbelung der Reinigungsflüssigkeit im Bad 4 zu verhindern, ist das untere Ende der hohlen Welle 18 mit dem Propellerteil 24 gegenüber den tieferen Bereichen des Bades 4 mittels eines beckenförmigen Bodenteiles 22 abgeschirmt, welches dicht unterhalb der Oberfläche des Bades 4 angeordnet ist. Auf der Oberseite des Bodenteiles 4 sind zur Achse der hohlen Welle 18 radiale Stege 23 angeordnet, welche eine Ringströmung auf der Oberseite des Bodenteiles 22 beim Umlauf der hohlen Welle 18 verhindern und dadurch die Wirkung des Propellerteiles 24, d.h. die mögliche Förderhöhe der Reinigungsflüssigkeit innerhalb der hohlen Welle 18, erhöhen.

Zum Antrieb der hohlen Welle 18 dient ein auf dem Boden 11 angeordneter eigenbelüfteter Elektromotor 25, dessen mit der hohlen Welle 18 verbundene Motorwelle die im übrigen ohne Lagerung angeordnete Scheibenanordnung 17 radial und axial lagert. Der vom Lüfterrad des Elektromotors 25 erzeugte Kühlluftstrom wird nach Kühlung des Motors 25 teilweise durch eine beispielsweise ringförmige, die hohle Welle 18 umschließende Öffnung 26 im Boden 11 in den Behandlungsraum 9 und teilweise durch einen Ringspalt 27 oberhalb des Bodens 11 unter Umleitung der Strömungsrichtung mittels eines glockenförmigen Leitbleches 28 in die Ringkammer 15 geleitet.

Die beschriebene Anordnung arbeitet in der folgenden Weise, wobei beispielsweise Rauchgase einer nicht dargestellten Feuerungsanlage gereinigt werden sollen. Die die Zuführleitung 14 durchströmenden Rauchgase gelangen zunächst in den Ringraum 7, wo sie einen Großteil ihres Wärmeinhaltes an einen dort angeordneten Wärmetauscher 29 abgeben. Dabei kondensieren Teile der dampfförmigen Verunreinigungen der Rauchgase auf den Außenflächen des Wärmetauschers 29, von wo das Kondensat nach einiger Zeit in das Bad 4 abtropft. Der Wärmetauscher 29 ermöglicht also einerseits die Ausnutzung der in den Rauchgasen mitgeführten Wärmeenergie, einschließlich der Kondensationswärme der mitgeführten Dämpfe, andererseits bewirkt der Wärmetauscher 29 eine Vorreinigung der Rauchgase, da ein großer Teil mitgeführter Dämpfe abgefangen wird. Danach gelangen die vorgereinigten Rauchgase in den Behandlungsraum 9, wo die umlaufenden Scheiben 19 mit ihren propellerartigen Lappen 20 beim Umlauf eine nach abwärts gerichtete Strömung anfachen.

Beim Umlauf der Scheibenanordnung 17 werden deren Scheiben 19 über die Öffnungen 21 dauernd mit Flüssigkeit beaufschlagt, welche vor allem an den Rändern der in den Scheiben 19 angeordneten Löchern sowie am Außenrand der Scheiben 19 unter Bildung jeweils einer ringförmigen Sprühzone abreißt. Aufgrund der nach unten abnehmenden Durchmesser der Scheiben 19 wird eine unerwünscht starke Behinderung des Rauchgasdurchsatzes des Behandlungsraumes 9 vermieden. Dies läßt sich wie folgt erklären:

Eine unterhalb der obersten Scheibe 19 verlaufende horizontale (virtuelle) Ebene wird im wesentlichen nur von der Flüssigkeit durchsetzt, welche von der obersten Scheibe 19 versprüht wird. Eine unterhalb der unteren Scheibe 19 verlaufende weitere horizontale (virtuelle) Ebene wird dagegen von einer größeren Flüssigkeitsmenge durchquert, entsprechend der Sprühleistung beider Scheiben 19. Der in Strömungsrichtung der Rauchgase nach unten zunehmende Freiraum zwischen den Rändern der Scheiben 19 und der Zylinderwand 6 verhindert also eine "Verstopfung" des Behandlungsraumes 9 durch die versprühte Flüssigkeit.

Innerhalb der von den Scheiben 19 gebildeten Sprühzonen gelangen die von der Scheibenanordnung 17 verwirbelten Rauchgase in innigen Kontakt mit der versprühten Reinigungsflüssigkeit, so daß praktisch sämtliche in den Rauchgasen enthaltenen Schadstoffe von der Flüssigkeit aufgenommen werden. Die Rauchgase werden also in äußerst intensiver Weise gewaschen.

Danach strömen die gewaschenen Rauchgase durch die Leitungen bzw. Tunnel 12 in den Ringraum 7, von wo sie in die Ringkammer 15 gelangen. Gegebenenfalls kann zwischen dem Ringraum 7 und der Ringkammer 15 ein Tröpfchenabscheider 30 angeordnet sein, beispielsweise in Form eines Gewebevlieses, an dem mitgeführte Tröpfchen der Reinigungsflüssigkeit zurückgehalten werden, so daß dieselben nach einiger Zeit wiederum in das Bad 4 zurückfallen. Die nur noch geringe Restfeuchtigkeit der Rauchgase kondensiert in der Ringkammer 15 unter Einwirkung der vom Gebläserad des Elektromotors 25 eingeblasenen Kühlluft, welche im übrigen eine die gereinigten Rauchgase zur Ausblasleitung 16 mitreißende Luftströmung innerhalb der Ringkammer 15 bewirkt.

Das als Reinigungsflüssigkeit verwendete Wasser wird ständig neutralisiert. Dazu zweigt unterhalb der Oberfläche des Bades 4 eine Leitung 31 mit Gefälle aus dem Bad 4 ab, so daß ständig bzw. bei Öffnung eines nicht dargestellten Ventiles Wasser aus dem Bad 4 in einen Aufbereitungsbehälter 32 abfließen kann. Hier wird das Wasser mit Soda (Natriumcarbonat) versetzt und mittels der Leitung 33, welche aus dem Aufbereitungsbehälter 32 bis dicht unter die Propelleranordnung 24 herausgeführt ist, unter der Wirkung der Propelleranordnung 24 herausgesogen. Zusammen mit dem Wasser und dem in den Rauchgasen mitgeführten Kohlendioxid setzt sich das Natriumcarbonat

- 11 -

0118017

zu Natriumhydrogencarbonat um, welches dann zusammen mit dem in den Rauchgasen mitgeführten Schwefeldioxid, dem Wasser und dem Sauerstoff der durch die Öffnung 26 eingeblasenen Zusatzluft Natriumsulfat bildet. Gleichzeitig kann Kohlensäure gebildet werden, die jedoch ganz überwiegend zu Wasser und Kohlendioxid zerfällt. Das Natriumsulfat bildet im Bad 4 einen schlammartigen Niederschlag, der mittels einer vom Grund des Bades 4 abgehenden Leitung 34 in einen geschlossenen Trocknungsbehälter 35 eingebracht werden kann. Dazu läßt sich im Trocknungsbehälter 35 mittels einer Vakuumpumpe 36 Unterdruck erzeugen, so daß der schlammartige Niederschlag am Boden des Bades 4 abgesogen und in den Trocknungsbehälter 35 eingeleitet wird, ohne daß eine Schlammpumpe od.dgl. notwendig wäre. Der Durchsatz der Leitung 34 kann mittels eines Ventiles 37 gesteuert werden. Da der Trocknungsbehälter 35 innerhalb der Zuführleitung 14 angeordnet und damit der Heizwirkung der Rauchgase ausgesetzt ist, trocknet der in den Trocknungsbehälter 35 eingebrachte Schlamm schnell aus, wobei entweichender Wasserdampf mittels der Vakuumpumpe 36 in die Zuführleitung 14 oder auch das Bad 4 abgeführt wird.

Der Trocknungsbehälter 35 muß von Zeit zu Zeit entleert bzw. ausgewechselt werden. Um ohne Schwierigkeiten erkennen zu können, ob der Trocknungsbehälter 35 gefüllt ist, kann derselbe an einem lastempfindlichen Schaltglied aufgehängt sein, welches umschaltet, sobald der Trocknungsbehälter 35 aufgrund des aufgenommenen getrockneten Rückstandes ein vorgegebenes Gesamtgewicht überschreitet.

Außerdem muß von Zeit zu Zeit Soda, d.h. Natriumcarbonat, welches in Blöcken geliefert werden kann, in den Aufbereitungsbehälter 32 nachgefüllt werden.

- 12 -    0118017

Der Wartungsaufwand ist also insgesamt außerordentlich gering.

Mittels einer über Schwimmerventil 38 gesteuerten Leitung 39 wird bei Bedarf automatisch Frischwasser nachgeführt, so daß der Pegel des Bades 4 unverändert bleibt.

Der beschriebene Gasreiniger kann auch mit Vorteil zur Reinigung der fetthaltigen Rauchgase von Räuchereien für Fleisch- und Wurstwaren verwendet werden. In diesem Fall wird dem Wasser des Bades 4 zusätzlich ein Fett- bzw. Ölbindemittel beigesetzt.

Außerdem läßt sich der Gasreiniger auch zur Begasung von Flüssigkeiten, etwa zur Belüftung von Wasser, verwenden. In einem solchen Falle erhält das Bad 4 die zu begasende Flüssigkeit (z.B. Wasser), und das jeweilige Gas (z.B. Luft) strömt über die Leitung 14 in den Behandlungsraum 9.

Abweichend von der Darstellung in Fig. 1 kann der Wärmetauscher 29 auch innerhalb des Behandlungsraumes 9 nahe der Zylinderwand 6 angeordnet werden. Bei einer derartigen Anordnung fällt zwar die vom Wärmetauscher 29 gelieferte Wärme bei etwas verminderter Temperatur an, jedoch kann der Wärmetauscher 29 in diesem Falle aus einem relativ preiswerten Material hergestellt werden. Bei Anordnung im Behandlungsraum 9 wird nämlich der Wärmetauscher 29 ständig von dem Reinigungsmittel gewaschen, welches von der Scheibenanordnung 17 versprüht wird. Damit kann der Wärmetauscher 29 aus einem Material mit vergleichsweise geringer Korrosionsfestigkeit hergestellt werden, denn durch die ständige Reinigung des Wärmetauschers 29 wird eine Korrosionsgefahr weitestgehend ausgeschlossen. Eine entsprechende Anordnung kann also bei der Reinigung von besonders aggressiven Gasen bzw. von Gasen mit besonders aggressiven Verunreinigungen vorteilhaft sein.

Darüber hinaus ist es auch möglich, den Wärmetauscher 29 innerhalb des Bades 4 anzuordnen. Auch diese Anordnung hat wiederum den Vorteil, daß der Wärmetauscher nur einer sehr geringen Korrosionsgefahr ausgesetzt ist, weil die im Bad 4 vorhandene Reinigungsflüssigkeit in aller Regel korrosionshemmend wirkt. Darüber hinaus kann bei einer derartigen Anordnung des Wärmetauschers 29 vorteilhafterweise ein besonders geringes Bauvolumen erreicht werden, weil der Wärmeübergang von der im Bad 4 vorhandenen Reinigungsflüssigkeit auf die durch den Wärmetauscher 29 geleitete Flüssigkeit besonders intensiv ist.

Darüber hinaus lassen sich die Elemente des Wärmetauschers 29 als plattenförmige Hohlkörper ausbilden. Diese können im Bad 4 gemäß einer ersten Variante horizontal angeordnet werden. Bei einer derartigen Anordnung kann das Bodenteil 22 in Fig. 1 entfallen, weil die plattenförmigen Hohlkörper des im Bad 4 angeordneten Wärmetauschers 29 die unteren Bereiche des Bades 4 gegenüber der hohlen Welle 18 sowie dem darin angeordneten Propellerteil 24 (vgl. Fig. 3) abschirmen, so daß weder die hohle Welle 18 noch das Propellerteil 24 die tieferen Bereiche des Bades 24 verwirbeln können. Auch wenn das Bodenteil 22 weggelassen wird, sollen jedoch die in Fig. 1 dargestellten Stege 23 angeordnet werden, um eine hohe Pumpwirkung des Propellerteiles 24 zu erreichen.

Es ist auch möglich, die plattenförmigen Hohlkörper des Wärmetauschers 29 innerhalb des Bades 4 vertikal anzuordnen. Eine derartige Anordnung kann insofern vorteilhaft sein, als innerhalb des Bades 4 anfallender Feststoff-Niederschlag praktisch ungehindert nach unten absinken kann.

Die plattenförmigen Hohlkörper des Wärmetauschers werden bevorzugt aus zwei (zueinander im wesentlichen symmetrisch angeordneten) Schalenteilen hergestellt, welche an ihren Außenrändern miteinander verschweißt oder in sonstiger Weise verbunden sind. Vorzugsweise ist vorgesehen, daß die plattenförmigen Hohlkörper nach Art von Lochplatten ausgebildet sind, d.h. die Schalenteile sind auch im Bereich der Lochränder miteinander verschweißt bzw. verbunden. Eine derartige Anordnung hat den Vorteil, daß die Schalenteile aus sehr dünnem Blech hergestellt werden können, weil die Schalenteile aufgrund der lochplattenartigen Ausbildung des Hohlkörpers im Bereich der genann-ten Löcher mehrfach gegeneinander abgestützt sind. Darüber hinaus bewirken die genannten Löcher auch bei horizontaler Anordnung der plattenförmigen Hohlkörper des Wärmetauschers im Bad 4, daß im Bad 4 vorhandene bzw. gebildete Feststoffe ohne nennenswerte Störung durch die plattenförmigen Hohl-körper nach unten absinken können.

Abweichend von der Darstellung in Fig. 1 kann darüber hinaus die Ringkammer 15 ohne Ringspalt 27 oder eine vergleichbare Öffnung ausgebildet sein. In diesem Falle wird die vom Gebläserad des Elektromotors 25 geförderte Kühlluft teilweise durch einen Abstandsraum bzw. durch Rohre geleitet, der bzw. die zwischen dem Boden 11 und der Ringkammer 15 bis zur Außenseite des Oberteiles 3 hindurchgeführt sind. Bei einer solchen Anordnung bewirkt also der vom Motor 25 erzeugte Luftstrom lediglich eine Kühlung des Ringraumes 15, so daß Restfeuchtigkeit kondensieren kann, welche im Strom des gereinigten Gases mitgeführt wird.

Gegebenenfalls kann der obere Rand der Zylinderwand 6 U-förmig nach einwärts umgeschlagen sein, so daß der Behandlungs-raum 9 an seinem oberen Ende einen vergleichsweise geringen Querschnitt aufweist. Dadurch kann die Gebläsewirkung der

Scheibenanordnung 17 (die in Fig. 2 dargestellten propellerartigen Lappen 20 wirken als Axialgebläse) erhöht werden,
d.h. die Strömung des den Behandlungsraum 9 durchsetzenden
Gases wird verstärkt. Diese Wirkung dürfte darauf zurückzuführen sein, daß der Querschnitt auf der - in Strömungsrichtung des zu reinigenden Gases gesehen - Eingangsseite
des Behandlungsraumes 9 vergleichbare Größenordnung hat oder
etwas geringer ist als der Querschnitt der Leitungen 12
sowie des daran anschließenden Ringraumes 7.

- 16 -                    0118017

Patentansprüche

1. Gasreiniger, insbesondere für Rauchgase von Feuerungsanlagen, mit einem vom Gas durchsetzten Behandlungsraum (9) und einer darin als Sprühvorrichtung untergebrachten, um eine etwa vertikale Mittelachse rotierenden Scheibenanordnung (17), die - vorzugsweise über
eine die Scheiben (19) tragende hohle Welle (18) -
mit einer zu versprühenden Reinigungsflüssigkeit
unter Bildung eines an der Scheibenanordnung (17)
anhaftenden und von der Scheibenanordnung (17) unter
Einwirkung zentrifugaler Kräfte nach außen in Form
einer ringförmigen Sprühzone abreißenden Flüssigkeitsbelages beaufschlagbar ist, dadurch gekennzeichnet,
daß die Scheibenanordnung (17) eine oder mehrere
vorzugsweise perforierte Scheiben (19) aufweist,
an deren Umfang Ausnehmungen und/oder aerodynamisch
wirksame Elemente angeordnet sind, vorzugsweise indem
die Scheiben (19) vom Umfangsrand her vielfach eingeschnitten sind und die durch die Einschnitte gebildeten
Lappen (20) nach Art von Propellerblättern gegenüber
der Scheibenebene bzw. der Umlaufrichtung (U) mit
Anstellwinkel verwunden bzw. verschränkt sind, so daß
das Gas beim Umlauf der Scheibenanordnung (17) nach
radial auswärts sowie in Achsrichtung der Scheibenanordnung (17) - vorzugsweise nach abwärts gegen ein die
Reinigungsflüssigkeit enthaltendes Bad (4) - vom Gaszufuhrbereich des Behandlungsraumes (9) weggedrängt wird.

2. Gasreiniger nach Anspruch 1, dadurch gekennzeichnet,
daß die Scheibenanordnung (17) innerhalb eines ringförmigen, vorzugsweise stationären Mantels (6) angeordnet ist, der die Scheibenanordnung (17) mit radialem
Abstand in Umlaufrichtung (U) umgibt, und daß bei einer
Scheibenanordnung (17) mit mehreren von der Reinigungsflüssigkeit beaufschlagbaren Scheiben (19) der radiale Abstand zwischen Mantel (6) und Scheibenrand bei der jeweils vom Gaszufuhrbereich weiter entfernten Scheibe größer ist als bei der jeweils vorangehend angeordneten Scheibe.

3. Gasreiniger nach einem der Ansprüche 1 oder 2, dadurch gekennzeichnet, daß die hohle Welle (18) nur im Bereich ihres oberen Endes gelagert ist - vorzugsweise indem die hohle Welle (18) ohne eigenes Lager direkt an der Welle eines Motors (25) zum Antrieb der Scheibenanordnung (17) angeordnet und ausschließlich mittels der Lager der Motorwelle radial und axial geführt ist - und mit ihrem unteren offenen Ende in das die Reinigungsflüssigkeit enthaltende Bad (4) eintaucht sowie mittels propellerartiger Förderblätter (24), welche in dem offenen Ende angeordnet sind, beim Umlauf Flüssigkeit aus dem Bad (4) in die Welle (18) hinein zu Öffnungen (21) treibt, welche in der Wandung der hohlen Welle (18) jeweils nahe der Scheibenebene bzw. an die Scheibenebenen anschließend angeordnet sind.

4. Gasreiniger nach einem der Ansprüche 1 bis 3, dadurch gekennzeichnet, daß das Gas - vorzugsweise vor Einleitung in den Behandlungsraum (9) - über einen Wärmetauscher (29) strömt, welcher vorzugsweise derart angeordnet ist, daß auf ihm gebildetes Kondensat in das Bad (4) abtropfen kann, z.B. indem der Wärmetauscher (29) innerhalb eines den Behandlungsraum (9) umschließenden Ringraumes (8) angeordnet ist, welcher nach unten durch die Oberfläche des Bades (4) begrenzt ist.

5. Gasreiniger nach einem der Ansprüche 1 bis 4, dadurch gekennzeichnet, daß in das zu reinigende Gas Zusatzgas - bei Reinigung von Rauchgas bevorzugt Zusatzluft - und in das Bad (4) ein Neutralisationsmittel - bei Reinigung von Rauchgasen bevorzugt Soda (Natriumcarbonat) - eingeleitet werden können.

6. Gasreiniger nach einem der Ansprüche 1 bis 5, dadurch gekennzeichnet, daß das Bad (4) als Absetzbecken ausgebildet ist - wobei die gegebenenfalls mit ihrem unteren offenen Ende und dem Propellerteil (24) in das Bad eintauchende hohle Welle (18) oberhalb einer im Bad angeordneten Abschirmwand (22) angeordnet ist - und daß am Grund des Absetzbeckens angesammelter Schlamm in einen Trocknungsbehälter (35) einführbar ist, welcher, wenn warme oder heiße Gase, wie Rauchgase, gereinigt werden sollen, bevorzugt innerhalb der zum Gasreiniger führenden Gasleitung (14) angeordnet ist.

7. Gasreiniger nach einem der Ansprüche 1 bis 6, dadurch gekennzeichnet, daß im geschlossenen Trocknungsbehälter (35) mittels einer Saugvorrichtung (36) ein Unterdruck herstellbar ist, um den Schlamm über eine vom Grund des Absetzbeckens in den erhöht angeordneten Trocknungsbehälter (35) führende Saugleitung (34) in den Trocknungsbehälter (35) einzuführen.

8. Gasreiniger nach einem der Ansprüche 1 bis 7, dadurch gekennzeichnet, daß die Abluft eines zur Kühlung des Motors (25) der Scheibenanordnung (17) dienenden Gebläses teilweise in den Behandlungsraum (9) und teilweise in einen Trockenraum (15) einleitbar ist, welcher dem Behandlungsraum (9) zur Trocknung der nunmehr gereinigten Gase nachgeschaltet ist.

FIG.1

**FIG. 2**

**FIG. 3**